# EUROPEAN PATENT APPLICATION

(11) **EP 4 814 995 A1**
(43) Date of publication of application: **30.09.2026**
(21) Application number: 26166628.3
(22) Date of filing: 23.03.2026
(51) Int. Cl.: H01F 3/10, H01F 27/40, H01F 38/00, H02M 1/00, H02M 3/00

(54) **TRANSFORMER-INDUCTOR INTEGRATED DEVICE, SWITCHING POWER SUPPLY, AND POWER SUPPLY DEVICE**

(30) Priority: 24.03.2025 CN 202520537906 U
(71) Applicant: HUAWEI TECHNOLOGIES CO., LTD., Shenzhen 518129 (CN)
(72) Inventor: CAO, Wenyuan, Shenzhen, 518129 (CN); GAN, Jiahu, Shenzhen, 518129 (CN); WANG, Minglong, Shenzhen, 518129 (CN)
(74) Representative: Isarpatent

(57) **Abstract**

This disclosure provides a transformer-inductor integrated device, a switching power supply, and a power supply device, and belongs to the field of power electronics technologies. The integrated device includes a magnetic core, a first conducting wire, and a second conducting wire. The magnetic core includes a bottom plate, a top plate, an inductor center post, a first side post, and a first transformer center post, where the inductor center post, the first side post, and the first transformer center post are arranged in sequence. A part of the first conducting wire is wound around the inductor center post and forms an inductor winding, and a part of the first conducting wire is wound around the first transformer center post and forms a first primary-side winding. The second conducting wire is wound around the first transformer center post and forms a first secondary-side winding. The first conducting wire is continuously wound around the inductor center post and the first transformer center post in an uninterrupted manner. In this way, the inductor winding and the first primary-side winding disclosed in this disclosure include a total of two pins, thereby reducing a quantity of pins by two compared with a discrete inductor and a discrete transformer in which an inductor winding and a first primary-side winding include a total of four pins.

## Description

### TECHNICAL FIELD

This disclosure relates to the field of power electronics technologies, and in particular, to a transformer-inductor integrated device, a switching power supply, and a power supply device.

### BACKGROUND

A switching power supply is a power supply that uses modern power electronics technologies to control a ratio of turn-on time to turn-off time of a switching transistor, to maintain a stable output voltage. The switching power supply includes an inductor and a transformer.

In a related technology, the inductor and the transformer occupy a large area of a printed circuit board (printed circuit board, PCB), and this is not conducive to improving power density of the switching power supply. In addition, the inductor and the transformer include a large total quantity of pins, causing an increase in the occupied PCB area and an increase in a transmission loss of a current.

### SUMMARY

This disclosure provides a transformer-inductor integrated device, a switching power supply, and a power supply device. The transformer-inductor integrated device has a small size and a small quantity of pins. Technical solutions of the transformer-inductor integrated device, the switching power supply, and the power supply device are described as follows.

According to a first aspect, this disclosure provides a transformer-inductor integrated device. The transformer-inductor integrated device includes a magnetic core, a first conducting wire, and a second conducting wire. The magnetic core includes a bottom plate, a top plate, an inductor center post, a first side post, and a first transformer center post. One end of the inductor center post, the first side post, and the first transformer center post is connected to the bottom plate, and the other end is connected to the top plate. The first side post is arranged between the inductor center post and the first transformer center post. A part of the first conducting wire is wound around the inductor center post and forms an inductor winding, and a part of the first conducting wire is wound around the first transformer center post and forms a first primary-side winding of a first transformer, where two ends of the first conducting wire form a first pin and a second pin respectively. The second conducting wire is wound around the first transformer center post and forms a first secondary-side winding of the first transformer, where two ends of the second conducting wire form a third pin and a fourth pin respectively.

According to the technical solutions provided in this disclosure, the inductor winding and the windings of the first transformer (namely, the first primary-side winding and the first secondary-side winding) are wound around different center posts of the same magnetic core, so that a transformer and an inductor are integrated together, thereby reducing sizes of the transformer and the inductor and an occupied PCB area. In addition, in the transformer-inductor integrated device provided in this disclosure, a part of the first conducting wire is wound around the inductor center post and forms the inductor winding, and a part of the first conducting wire is wound around the first transformer center post and forms the first primary-side winding. In other words, the first conducting wire is continuously wound around the inductor center post and the first transformer center post in an uninterrupted manner. In this way, the inductor winding and the first primary-side winding disclosed in this disclosure include a total of two pins, namely, the first pin and the second pin at the two ends of the first conducting wire. In comparison with a discrete inductor and a discrete transformer in which an inductor winding includes two pins and a first primary-side winding includes two pins, a quantity of pins of the integrated device provided in this disclosure is reduced by at least two.

In an implementation, the magnetic core further includes a second side post, one end of the second side post is connected to the bottom plate, the other end is connected to the top plate, and the first transformer center post is arranged between the first side post and the second side post, thereby helping reduce magnetic leakage of the first transformer.

In an implementation, the magnetic core further includes a second transformer center post, one end of the second transformer center post is connected to the bottom plate, the other end is connected to the top plate, and the first transformer center post is arranged between the second transformer center post and the first side post. A part of the first conducting wire is further wound around the second transformer center post and forms a second primary-side winding of a second transformer, and the second transformer center post is further wound with a second secondary-side winding of the second transformer. The integrated device integrates two transformers and one inductor.

According to the technical solutions provided in this disclosure, a part of the first conducting wire is further wound around the second transformer center post and forms the second primary-side winding, so that the first conducting wire is continuously wound around the inductor center post, the first transformer center post, and the second transformer center post in an uninterrupted manner, thereby reducing the quantity of pins of the transformer-inductor integrated device. In two discrete transformers and a discrete inductor, an inductor winding includes two pins, a first primary-side winding includes two pins, and a second primary-side winding includes two pins. In contrast, in the integrated device provided in this disclosure, the inductor winding, the first primary-side winding, and the second primary-side winding include a total of two pins, namely, the first pin and the second pin at the two ends of the first conducting wire, thereby reducing the quantity of pins by at least four.

In an implementation, the transformer-inductor integrated device further includes a third conducting wire, and the third conducting wire is wound around the second transformer center post and forms the second secondary-side winding, where two ends of the third conducting wire form a fifth pin and a sixth pin respectively. In this way, the first secondary-side winding and the second secondary-side winding are formed by winding two independent conducting wires, and the first transformer and the second transformer may be in parallel for use, or may be in series for use.

In an implementation, a part of the second conducting wire is wound around the first transformer center post and forms the first secondary-side winding, and a part of the second conducting wire is wound around the second transformer center post and forms the second secondary-side winding. In other words, the second conducting wire is continuously wound around the first transformer center post and the second transformer center post in an uninterrupted manner, thereby further reducing the quantity of pins of the transformer-inductor integrated device. In two discrete transformers, a first secondary-side winding includes two pins, and a second secondary-side winding includes two pins. In contrast, in the integrated device provided in this disclosure, the first secondary-side winding and the second secondary-side winding include a total of two pins, namely, the third pin and the fourth pin at the two ends of the second conducting wire, thereby reducing the quantity of pins by at least two.

In an implementation, a direction of a magnetic field generated by the inductor winding at the first side post is opposite to a direction of a magnetic field generated by the first primary-side winding at the first side post. In this way, magnetic flux generated by the first primary-side winding at the first side post and magnetic flux generated by the inductor winding at the first side post can offset each other, so that magnetic flux of the first side post is small, and a magnetic saturation phenomenon is not likely to occur at the first side post, thereby reducing a cross-sectional area of the first side post and further reducing a size of the transformer-inductor integrated device and the occupied PCB area.

According to a second aspect, this disclosure provides another transformer-inductor integrated device. The transformer-inductor integrated device includes a magnetic core, a first conducting wire, and a second conducting wire. The magnetic core includes a bottom plate, a top plate, an inductor center post, a first side post, a first transformer center post, and a second transformer center post. One end of the inductor center post, the first side post, the first transformer center post, and the second transformer center post is connected to the bottom plate, and the other end is connected to the top plate. The inductor center post, the first side post, the first transformer center post, and the second transformer center post are arranged in sequence. The first conducting wire is wound around the inductor center post and forms an inductor winding, where two ends of the first conducting wire form a first pin and a second pin respectively. A part of the second conducting wire is wound around the first transformer center post and forms a first primary-side winding of a first transformer, and a part of the second conducting wire is wound around the second transformer center post and forms a second primary-side winding of a second transformer, where two ends of the second conducting wire form a third pin and a fourth pin respectively. The first transformer center post is further wound with a first secondary-side winding of the first transformer, and the second transformer center post is further wound with a second secondary-side winding of the second transformer.

According to the technical solutions provided in this disclosure, the inductor winding, the windings of the first transformer (namely, the first primary-side winding and the first secondary-side winding), and the windings of the second transformer (namely, the second primary-side winding and the second secondary-side winding) are wound around different center posts of the same magnetic core, so that two transformers and an inductor are integrated together, thereby reducing sizes of the transformers and the inductor and an occupied PCB area. In addition, in the transformer-inductor integrated device provided in this disclosure, a part of the second conducting wire is wound around the first transformer center post and forms the first primary-side winding, and a part of the second conducting wire is wound around the second transformer center post and forms the second primary-side winding. In other words, the second conducting wire is continuously wound around the first transformer center post and the second transformer center post in an uninterrupted manner. In this way, the first primary-side winding and the second primary-side winding include a total of two pins, namely, the third pin and the fourth pin at the two ends of the second conducting wire. In comparison with two discrete transformers in which two primary-side windings include a total of four pins, a quantity of pins of the transformer-inductor integrated device provided in this disclosure is reduced by at least two.

In an implementation, the transformer-inductor integrated device further includes a third conducting wire and a fourth conducting wire. The third conducting wire is wound around the first transformer center post and forms the first secondary-side winding, where two ends of the third conducting wire form a fifth pin and a sixth pin respectively. The fourth conducting wire is wound around the second transformer center post and forms the second secondary-side winding, where two ends of the fourth conducting wire form a seventh pin and an eighth pin respectively. In this way, the first secondary-side winding and the second secondary-side winding are formed by winding two independent conducting wires, and the first transformer and the second transformer may be in parallel for use, or may be in series for use.

In an implementation, the transformer-inductor integrated device further includes a third conducting wire. A part of the third conducting wire is wound around the first transformer center post and forms the first secondary-side winding, and a part of the third conducting wire is wound around the second transformer center post and forms the second secondary-side winding, where two ends of the third conducting wire form a fifth pin and a sixth pin respectively. In other words, the third conducting wire is continuously wound around the first transformer center post and the second transformer center post in an uninterrupted manner, thereby further reducing the quantity of pins of the transformer-inductor integrated device. In two discrete transformers, a first secondary-side winding includes two pins, and a second secondary-side winding includes two pins. In contrast, in the integrated device provided in this disclosure, the first secondary-side winding and the second secondary-side winding include a total of two pins, namely, the fifth pin and the sixth pin at the two ends of the third conducting wire, thereby reducing the quantity of pins by at least two.

In an implementation, the magnetic core further includes a second side post, one end of the second side post is connected to the bottom plate, the other end is connected to the top plate, and the first transformer center post and the second transformer center post are arranged between the first side post and the second side post, thereby helping reduce magnetic leakage of the first transformer and the second transformer.

In an implementation, a direction of a magnetic field generated by the inductor winding at the first side post is opposite to a direction of a magnetic field generated by the first primary-side winding at the first side post. In this way, magnetic flux generated by the first primary-side winding at the first side post and magnetic flux generated by the inductor winding at the first side post can offset each other, so that magnetic flux of the first side post is small, and a magnetic saturation phenomenon is not likely to occur at the first side post, thereby reducing a cross-sectional area of the first side post and further reducing a size of the transformer-inductor integrated device to help improve power density of a switching power supply.

According to a third aspect, this disclosure provides a switching power supply. The switching power supply includes an inverter circuit, a rectifier circuit, and the transformer-inductor integrated device according to any one of the possible implementations of the first aspect or the second aspect. The transformer-inductor integrated device is connected between the inverter circuit and the rectifier circuit. Using the transformer-inductor integrated device according to the first aspect or the second aspect helps improve power density of the switching power supply.

According to a fourth aspect, this disclosure provides a power supply device. The power supply device includes a plurality of switching power supplies according to the third aspect, and the plurality of switching power supplies are connected in parallel.

### BRIEF DESCRIPTION OF DRAWINGS

FIG. 1 is a diagram of a switching power supply according to an embodiment of this disclosure;
FIG. 2 is a diagram of an application scenario of a communication power supply according to an embodiment of this disclosure;
FIG. 3 is a diagram of a first type of transformer-inductor integrated device according to an embodiment of this disclosure;
FIG. 4 is a diagram of a second type of transformer-inductor integrated device according to an embodiment of this disclosure;
FIG. 5 is a diagram of a third type of transformer-inductor integrated device according to an embodiment of this disclosure;
FIG. 6 is a principle diagram of the transformer-inductor integrated devices shown in FIG. 3 to FIG. 5 according to an embodiment of this disclosure;
FIG. 7 is a diagram of a first type of switching power supply according to an embodiment of this disclosure;
FIG. 8 is a diagram of a magnetic field of a transformer-inductor integrated device according to an embodiment of this disclosure;
FIG. 9 is a diagram of a fourth type of transformer-inductor integrated device according to an embodiment of this disclosure;
FIG. 10 is a principle diagram of the transformer-inductor integrated device shown in FIG. 9 according to an embodiment of this disclosure;
FIG. 11 is a diagram of a second type of switching power supply according to an embodiment of this disclosure;
FIG. 12 is a diagram of a third type of switching power supply according to an embodiment of this disclosure;
FIG. 13 is a diagram of a fifth type of transformer-inductor integrated device according to an embodiment of this disclosure;
FIG. 14 is a principle diagram of the transformer-inductor integrated device shown in FIG. 13 according to an embodiment of this disclosure;
FIG. 15 is a diagram of a fourth type of switching power supply according to an embodiment of this disclosure;
FIG. 16 is a diagram of a sixth type of transformer-inductor integrated device according to an embodiment of this disclosure;
FIG. 17 is a principle diagram of the transformer-inductor integrated device shown in FIG. 16 according to an embodiment of this disclosure;
FIG. 18 is a diagram of a fifth type of switching power supply according to an embodiment of this disclosure;
FIG. 19 is a diagram of a sixth type of switching power supply according to an embodiment of this disclosure;
FIG. 20 is a diagram of a seventh type of transformer-inductor integrated device according to an embodiment of this disclosure;
FIG. 21 is a principle diagram of the transformer-inductor integrated device shown in FIG. 20 according to an embodiment of this disclosure;
FIG. 22 is a diagram of a seventh type of switching power supply according to an embodiment of this disclosure; and
FIG. 23 is a diagram of a power supply device according to an embodiment of this disclosure.

### Reference numerals:

001: power supply device;
01: switching power supply;
10: inverter circuit; 20: rectifier circuit; 30: inductor; 40: transformer; 50: transformer-inductor integrated device;
1: magnetic core; 11: bottom plate; 12: top plate; 13: inductor center post; 14: first side post; 15: first transformer center post; 16: second side post; 17: second transformer center post;
2: first conducting wire; 201: first pin; 202: second pin;
3: second conducting wire; 301: third pin; 302: fourth pin;
4: third conducting wire; 401: fifth pin; 402: sixth pin;
5: fourth conducting wire; 501: seventh pin; 502: eighth pin;
100: inductor winding; 200: first primary-side winding; 300: first secondary-side winding; 400: second primary-side winding; 500: second secondary-side winding.

### DESCRIPTION OF EMBODIMENTS

A switching power supply is a power supply that uses modern power electronics technologies to control a ratio of turn-on time to turn-off time of a switching transistor, to maintain a stable output voltage. The switching power supply is widely applied to various scenarios, for example, applied to scenarios such as a communication base station, a photovoltaic scenario, a charging station, and a data center. Specifically, a switching power supply provided in embodiments of this disclosure may be a rectifier, an inverter, a charging module, a communication power supply, or the like.

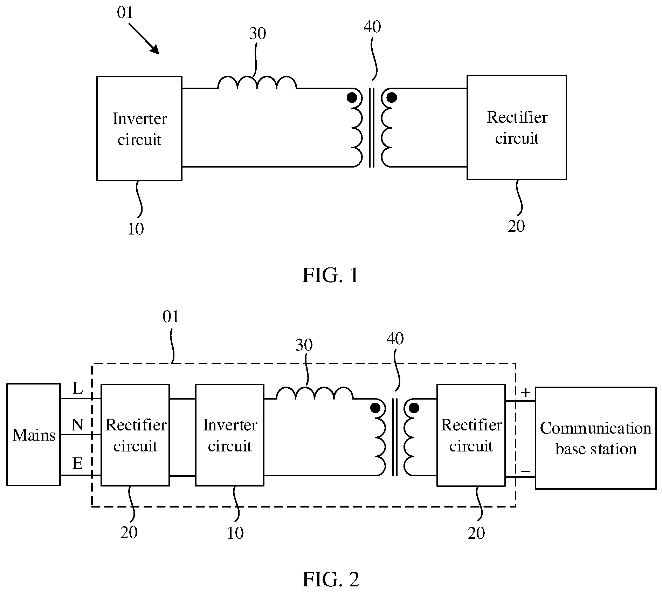

FIG. 1 is a diagram of a basic architecture of a switching power supply 01. As shown in FIG. 1, the switching power supply 01 includes at least an inverter circuit 10, a rectifier circuit 20, an inductor 30, and a transformer 40. One pin of the inductor 30 is connected to the inverter circuit 10, the other pin of the inductor 30 is connected to one pin of a primary-side winding of the transformer 40, and the other pin of the primary-side winding is connected to the inverter circuit 10. Two pins of a secondary-side winding of the transformer 40 are separately connected to the rectifier circuit 20.

The inverter circuit 10 is configured to convert an input direct current into a high-frequency alternating-current square wave. The inductor 30 and the transformer 40 are configured to convert the high-frequency alternating-current square wave into an alternating-current voltage. The rectifier circuit 20 is configured to convert the alternating-current voltage into a direct-current output voltage, and output the voltage to a load. The inductor 30 is configured to receive the high-frequency alternating-current square wave and perform periodic charging and discharging. During discharging, the inductor 30 transfers electric energy to the transformer 40, and the transformer 40 performs voltage transformation on the electric energy and transfers the electric energy to the rectifier circuit 20.

It should be noted that FIG. 1 shows merely the basic architecture of the switching power supply 01. Both input and output of the switching power supply 01 shown in FIG. 1 are direct currents. During actual application, to diversify forms of currents input and output by the switching power supply 01, a corresponding circuit may be further disposed in the switching power supply 01 to convert the forms of the currents.

For example, another rectifier circuit is disposed at an input end of the inverter circuit 10 in FIG. 1, and the rectifier circuit is configured to receive an alternating current, convert the alternating current into a direct current, and output the direct current to the inverter circuit 10, so that the switching power supply 01 is input with the alternating current, and outputs the direct current. For another example, another inverter circuit is disposed at an output end of the rectifier circuit 20 in FIG. 1, and the inverter circuit is configured to convert a direct current output by the rectifier circuit 20 into an alternating current, and output the alternating current to the load, so that the switching power supply 01 is input with the direct current, and outputs the alternating current. For another example, with reference to the foregoing two technical solutions, another rectifier circuit is disposed at the input end of the inverter circuit 10 in FIG. 1, and an inverter circuit is disposed at the output end of the rectifier circuit 20 in FIG. 1, so that the switching power supply is input with an alternating current, and outputs an alternating current.

The following describes specific application of the switching power supply by using an example in which the switching power supply is a communication power supply. As shown in FIG. 2, when a switching power supply 01 is a communication power supply, a rectifier circuit 20 is further disposed at an input end of an inverter circuit 10. The rectifier circuit 20 is configured to connect to a mains power supply (an alternating current), convert the alternating current into a direct current, and output the direct current to the inverter circuit 10. After the inverter circuit 10, an inductor 30, a transformer 40, and the rectifier circuit 20 process electric energy in the manner described previously, the rectifier circuit 20 outputs the electric energy to a communication base station.

In a related technology, the inductor 30 and the transformer 40 of the switching power supply are designed in a discrete manner. Therefore, the inductor 30 and the transformer 40 have large sizes, and occupy a large area of a printed circuit board (printed circuit board, PCB). This is not conducive to improving power density of the switching power supply.

In addition, the inductor 30 and the transformer 40 include a large total quantity of pins. The inductor 30 includes two pins, a primary-side winding of the transformer 40 includes two pins, and a secondary-side winding includes two pins. Therefore, the inductor 30 and one transformer 40 include a total of six pins. In addition, some switching power supplies each include two transformers 40, and the inductor 30 and the two transformers 40 include a total of ten pins.

Because a framework (or referred to as a magnetic core) of the inductor 30 and the transformer 40 needs to have enough space for leading out pins, sizes of the inductor 30 and the transformer 40 are larger as the quantity of pins included in the inductor 30 and the transformer 40 is larger. In addition, if the pins need to be connected to the PCB, a wiring network on the PCB is more complex as the quantity of pins is larger, further increasing the PCB area occupied by the inductor 30 and the transformer 40. Furthermore, the pins need to be led out from the framework, increasing a wire length and causing an extra loss. In addition, the pins need to be hot-soldered to connect to the PCB, and then a cylindrical conductor of several millimeters is formed, with a severe skin effect, a large local loss, and a large loss of current transfer in the PCB. Therefore, excessive pins also increase a transmission loss of a current.

In conclusion, a key technical issue is about how to reduce the sizes of the inductor 30 and the transformer 40 and reduce the quantity of pins included in the inductor 30 and the transformer 40.

In view of the foregoing technical issue, embodiments of this disclosure provide a transformer-inductor integrated device 50. The integrated device integrates an inductor and a transformer, to reduce the occupied PCB area and the quantity of pins, thereby helping improve power density of a switching power supply and reduce a loss.

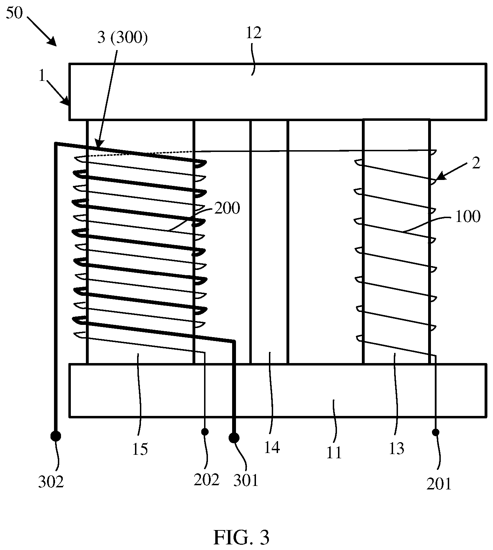

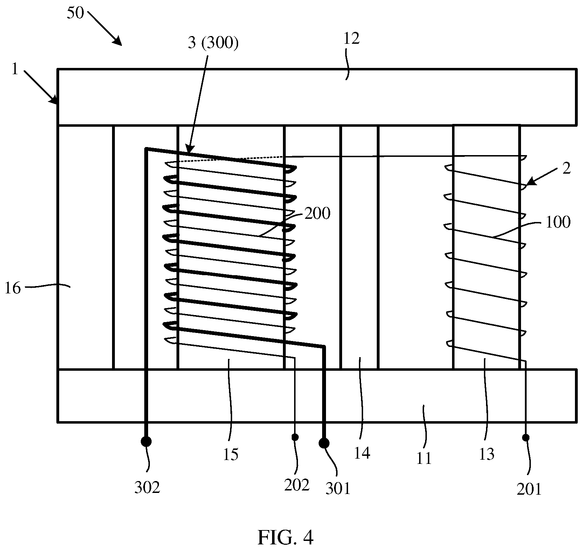

The following describes the transformer-inductor integrated device 50 provided in embodiments of this disclosure by using examples. FIG. 3 and FIG. 4 are diagrams of the transformer-inductor integrated device 50. In some examples, as shown in FIG. 3, the transformer-inductor integrated device 50 includes a magnetic core 1, an inductor winding 100, a first primary-side winding 200, and a first secondary-side winding 300. The magnetic core 1 includes a bottom plate 11, a top plate 12, an inductor center post 13, a first side post 14, and a first transformer center post 15. One end of the inductor center post 13, the first side post 14, and the first transformer center post 15 is connected to the bottom plate 11, and the other end is connected to the top plate 12. The first side post 14 is arranged between the inductor center post 13 and the first transformer center post 15. The inductor center post 13 is wound with the inductor winding 100. The first transformer center post 15 is wound with the first primary-side winding 200 and the first secondary-side winding 300. The first primary-side winding 200 and the first secondary-side winding 300 form a first transformer or windings of the first transformer.

According to the technical solutions provided in embodiments of this disclosure, the inductor winding 100 and the windings of the first transformer are wound around different center posts of the same magnetic core 1, so that a transformer and an inductor are integrated together, thereby reducing a PCB area occupied by the transformer and the inductor. In addition, in the technical solutions provided in embodiments of this disclosure, the first transformer and the inductor share the first side post 14, or it is understood that the first transformer and the inductor are integrated together by using the first side post 14. Therefore, a quantity of magnetic posts included in the transformer-inductor integrated device 50 is reduced, and the transformer-inductor integrated device 50 has a smaller size than a discrete transformer and a discrete inductor, thereby reducing the occupied PCB area.

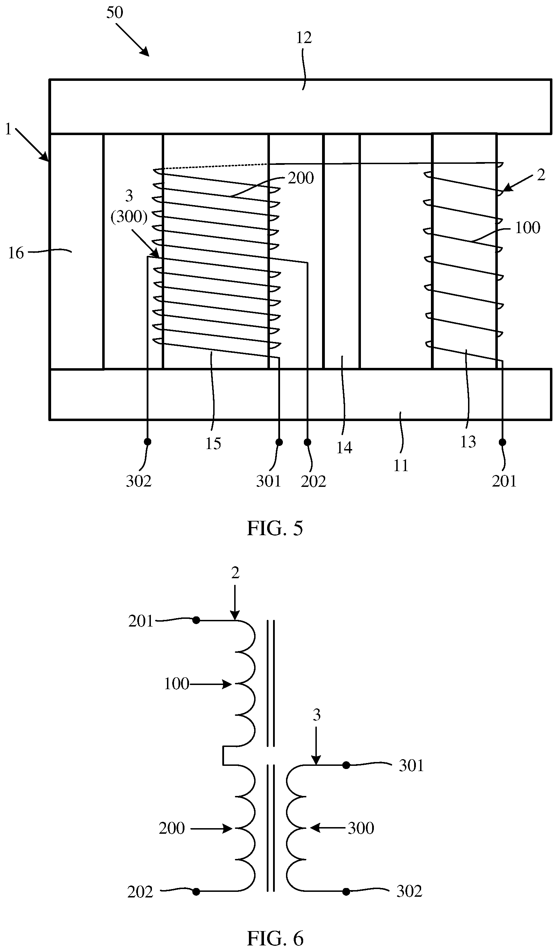

In some examples, as shown in FIG. 4 and FIG. 5, the magnetic core 1 in the transformer-inductor integrated device 50 provided in embodiments of this disclosure may further include a second side post 16. One end of the second side post 16 is connected to the bottom plate 11, and the other end is connected to the top plate 12. The first transformer center post 15 is arranged between the first side post 14 and the second side post 16. Disposing the second side post 16 helps reduce magnetic leakage of the first transformer.

The following describes implementations of the inductor winding 100, the first primary-side winding 200, and the first secondary-side winding 300 by using examples.

In some examples, as shown in FIG. 3 to FIG. 5, the transformer-inductor integrated device 50 includes a first conducting wire 2. A part of the first conducting wire 2 is wound around the inductor center post 13 and forms the inductor winding 100, and another part of the first conducting wire 2 is wound around the first transformer center post 15 and forms the first primary-side winding 200. In other words, the first conducting wire 2 is continuously wound around the inductor center post 13 and the first transformer center post 15 in an uninterrupted manner. In this way, the inductor winding 100 and the first primary-side winding 200 include a total of two pins, namely, a first pin 201 and a second pin 202 at two ends of the first conducting wire 2. In comparison with a discrete inductor and a discrete transformer in which an inductor winding 100 includes two pins and a first primary-side winding 200 includes two pins, a quantity of pins of the transformer-inductor integrated device 50 provided in embodiments of this disclosure is reduced by at least two.

In some examples, as shown in FIG. 3 to FIG. 5, the transformer-inductor integrated device 50 includes a second conducting wire 3, and the second conducting wire 3 is wound around the first transformer center post 15 and forms the first secondary-side winding 300.

In addition, positions of the first primary-side winding 200 and the first secondary-side winding 300 on the first transformer center post 15 are not limited in embodiments of this disclosure. In some examples, as shown in FIG. 3 and FIG. 4, one of the first primary-side winding 200 and the first secondary-side winding 300 is located at an inner layer, and the other is located at an outer layer. For example, the first primary-side winding 200 is at the inner layer, and the first secondary-side winding 300 is at the outer layer. In this way, the transformer windings are more compact to help reduce the size of the transformer-inductor integrated device 50. In FIG. 3 and FIG. 4, wire widths of the first primary-side winding 200 and the first secondary-side winding 300 are different, only to distinguish that the first primary-side winding 200 and the first secondary-side winding 300 are located at different layers. This does not mean that actual wire widths of the first primary-side winding 200 and the first secondary-side winding 300 are different. In some other examples, as shown in FIG. 5, the first primary-side winding 200 and the first secondary-side winding 300 are arranged along an axial direction of the first transformer center post 15.

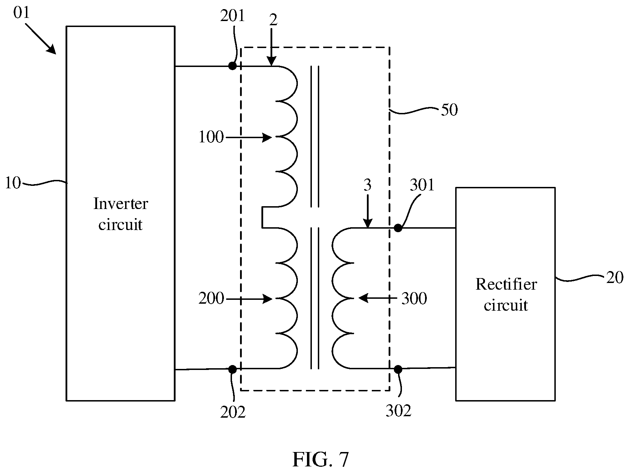

FIG. 6 is a principle diagram of the transformer-inductor integrated devices 50 shown in FIG. 3 to FIG. 5. FIG. 7 is a diagram of a switching power supply including the transformer-inductor integrated devices 50 shown in FIG. 3 to FIG. 5. In some examples, as shown in FIG. 7, the switching power supply 01 includes an inverter circuit 10, a rectifier circuit 20, and the transformer-inductor integrated device 50. The first pin 201 and the second pin 202 at two ends of the first conducting wire 2 are connected to the inverter circuit 10. A third pin 301 and a fourth pin 302 of the second conducting wire 3 are connected to the rectifier circuit 20.

It may be understood that, in the transformer-inductor integrated device 50, because the first transformer and the inductor share the first side post 14, the first transformer and the inductor each generate a magnetic field at the first side post 14. In some examples, directions of magnetic fields generated by the inductor winding 100 and the first primary-side winding 200 at the first side post 14 are the same. In this way, magnetic flux generated by the inductor winding 100 at the first side post 14 is superposed with magnetic flux generated by the first primary-side winding 200 at the first side post 14, so that magnetic flux of the first side post 14 is large. In this case, a cross-sectional area of the first side post 14 needs to be increased, to reduce magnetic flux density of the first side post 14, avoid a magnetic saturation phenomenon, and reduce a magnetic core loss.

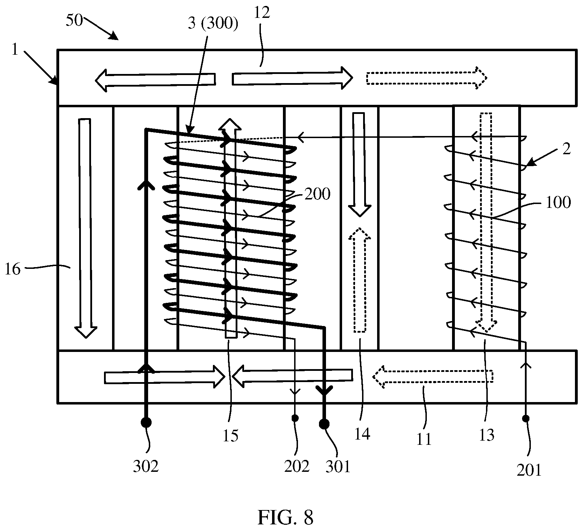

In some other examples, as shown in FIG. 8, a direction of a magnetic field generated by the first primary-side winding 200 at the first side post 14 is opposite to a direction of a magnetic field generated by the inductor winding 100 at the first side post 14. In FIG. 8, an arrow on a winding represents a direction of a current. A solid line arrow on a magnetic post represents the direction of the magnetic field generated by the first primary-side winding 200, and a dashed line arrow on a magnetic post represents the direction of the magnetic field generated by the inductor winding 100. It can be learned from FIG. 8 that the magnetic flux generated by the first primary-side winding 200 at the first side post 14 offsets the magnetic flux generated by the inductor winding 100 at the first side post 14, so that the magnetic flux of the first side post 14 is small. Therefore, even if the cross-sectional area of the first side post 14 is not increased (or even the cross-sectional area of the first side post 14 may be reduced), the magnetic saturation phenomenon does not occur. In this way, the size of the transformer-inductor integrated device 50 can be further reduced.

In some examples, as shown in FIG. 8, the cross-sectional area of the first side post 14 is less than a cross-sectional area of the second side post 16. In a related technology, side posts on two sides of a transformer center post of an independent transformer generally have a same cross-sectional area. Compared with the technical solution in the related technology, the technical solutions provided in embodiments of this disclosure have equivalently reduced the cross-sectional area of the first side post 14, thereby further reducing the size of the transformer-inductor integrated device 50.

In some examples, as shown in FIG. 8, along an arrangement direction of the second side post 16, the first transformer center post 15, the first side post 14, and the inductor center post 13, a width of the first side post 14 is less than a width of the second side post 16.

In some examples, as shown in FIG. 8, the cross-sectional area of the first side post 14 is less than a cross-sectional area of the inductor center post 13. In a related technology, an inductor center post of an independent inductor and a side post on one side generally have a same cross-sectional area. Compared with the technical solution in the related technology, the technical solutions provided in embodiments of this disclosure have equivalently reduced the cross-sectional area of the first side post 14, thereby further reducing the size of the transformer-inductor integrated device 50.

In some examples, as shown in FIG. 8, along the arrangement direction of the second side post 16, the first transformer center post 15, the first side post 14, and the inductor center post 13, the width of the first side post 14 is less than a width of the inductor center post 13.

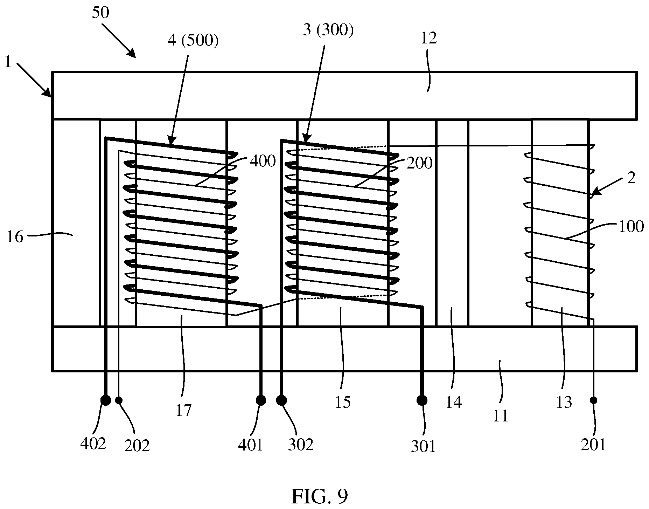

It should be noted that, the transformer-inductor integrated device 50 may further integrate a second transformer in addition to the first transformer. Accordingly, as shown in FIG. 9, the magnetic core 1 further includes a second transformer center post 17. One end of the second transformer center post 17 is connected to the bottom plate 11, and the other end is connected to the top plate 12. The first transformer center post 15 is arranged between the second transformer center post 17 and the first side post 14. The transformer-inductor integrated device 50 further includes a second primary-side winding 400 and a second secondary-side winding 500. The second primary-side winding 400 and the second secondary-side winding 500 are wound around the second transformer center post 17. The second primary-side winding 400 and the second secondary-side winding 500 form the second transformer.

An implementation of the second primary-side winding 400 is not limited in embodiments of this disclosure. In some examples, the second primary-side winding 400 is formed by winding an independent conducting wire, and the conducting wire is disconnected from the first conducting wire 2.

In some other examples, as shown in FIG. 9, a part of the first conducting wire 2 is further wound around the second transformer center post 17 and forms the second primary-side winding 400. In other words, the first conducting wire 2 is continuously wound around the inductor center post 13, the first transformer center post 15, and the second transformer center post 17 in an uninterrupted manner, thereby reducing the quantity of pins of the transformer-inductor integrated device 50. In two discrete transformers and a discrete inductor, an inductor winding includes two pins, a first primary-side winding includes two pins, and a second primary-side winding includes two pins. In the technical solutions provided in embodiments of this disclosure, the inductor winding 100, the first primary-side winding 200, and the second primary-side winding 400 include a total of two pins (namely, the first pin 201 and the second pin 202), thereby reducing the quantity of pins by at least four.

An implementation of the second secondary-side winding 500 is also not limited in embodiments of this disclosure. In some examples, as shown in FIG. 9, the transformer-inductor integrated device 50 further includes a third conducting wire 4. The third conducting wire 4 is wound around the second transformer center post 17 and forms the second secondary-side winding 500. The third conducting wire 4 is disconnected from the second conducting wire 3. The first transformer and the second transformer may be in parallel for use, or may be in series for use.

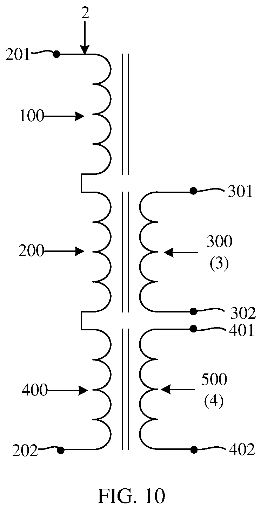

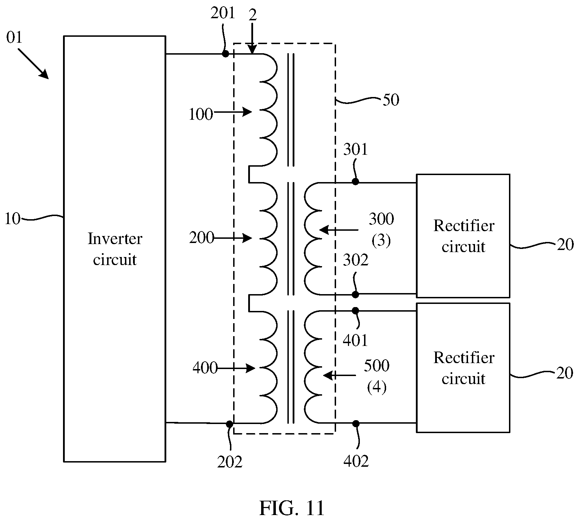

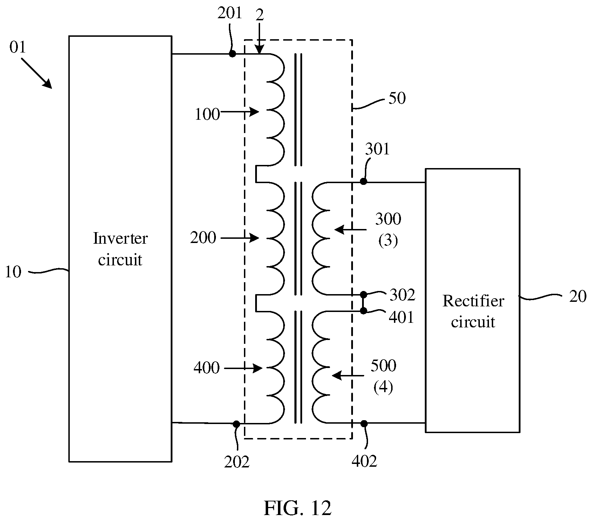

FIG. 10 is a principle diagram of the transformer-inductor integrated device 50 shown in FIG. 9. FIG. 11 and FIG. 12 are diagrams of two types of switching power supplies including the transformer-inductor integrated device 50 shown in FIG. 9. In some examples, as shown in FIG. 11, the switching power supply includes an inverter circuit 10, two rectifier circuits 20, and the transformer-inductor integrated device 50. The first pin 201 and the second pin 202 at two ends of the first conducting wire 2 are connected to the inverter circuit 10. The third pin 301 and the fourth pin 302 of the second conducting wire 3 are connected to one rectifier circuit 20, and a fifth pin 401 and a sixth pin 402 of the third conducting wire 4 are connected to the other rectifier circuit 20. The switching power supply shown in FIG. 11 can output electric energy externally through the two rectifier circuits 20.

In some other examples, as shown in FIG. 12, the switching power supply includes an inverter circuit 10, a rectifier circuit 20, and the transformer-inductor integrated device 50. The first pin 201 and the second pin 202 at two ends of the first conducting wire 2 are connected to the inverter circuit 10. The third pin 301 of the second conducting wire 3 is connected to the rectifier circuit 20, the fourth pin 302 of the second conducting wire 3 is connected to the fifth pin 401 of the third conducting wire 4, and the sixth pin 402 of the third conducting wire 4 is connected to the rectifier circuit 20. The fourth pin 302 of the second conducting wire 3 and the fifth pin 401 of the third conducting wire 4 may be electrically connected by using a PCB, or may be electrically connected by directly connecting (for example, welding) two conducting wires. In FIG. 12, the first secondary-side winding 300 and the second secondary-side winding 500 are connected in series, thereby increasing an input voltage of the rectifier circuit 20.

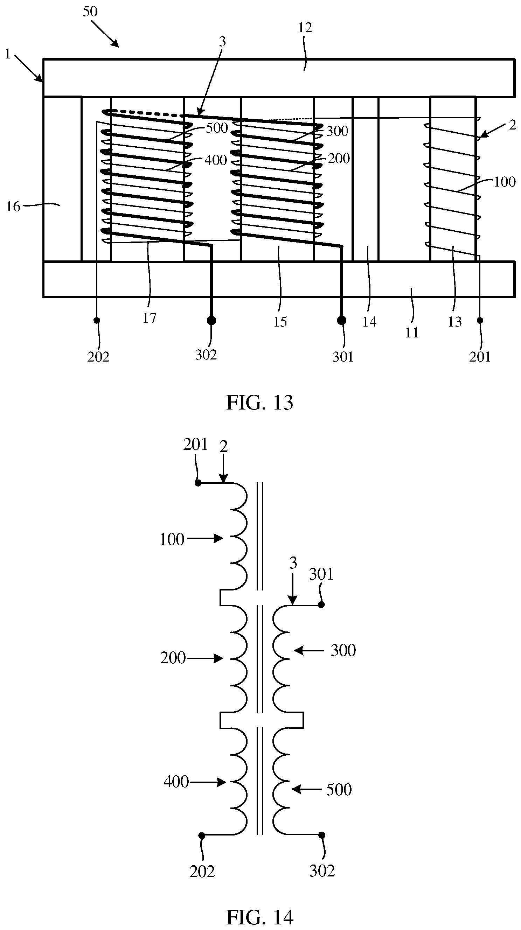

In addition to the technical solution in which the independent third conducting wire 4 is wound around the second transformer center post 17 and forms the second secondary-side winding 500, in some other examples, as shown in FIG. 13, a part of the second conducting wire 3 may alternatively be wound around the first transformer center post 15 and form the first secondary-side winding 300 while another part may be wound around the second transformer center post 17 and form the second secondary-side winding 500. In other words, the second conducting wire 3 is continuously wound around the first transformer center post 15 and the second transformer center post 17 in an uninterrupted manner. In this way, the first secondary-side winding 300 and the second secondary-side winding 500 include a total of two pins, namely, the third pin 301 and the fourth pin 302 at the two ends of the second conducting wire 3. In two discrete transformers, a first secondary-side winding includes two pins, and a second secondary-side winding includes two pins.

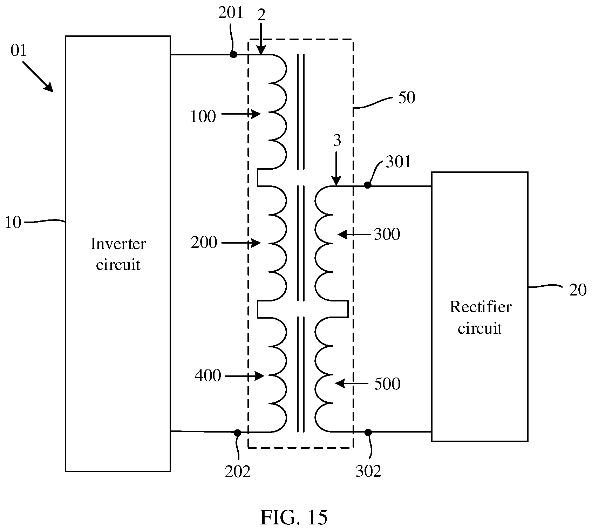

FIG. 14 is a principle diagram of the transformer-inductor integrated device 50 shown in FIG. 13. FIG. 15 is a diagram of a switching power supply including the transformer-inductor integrated device 50 shown in FIG. 14. In some examples, as shown in FIG. 15, the switching power supply includes an inverter circuit 10, a rectifier circuit 20, and the transformer-inductor integrated device 50. The first pin 201 and the second pin 202 at two ends of the first conducting wire 2 are connected to the inverter circuit 10. The third pin 301 and the fourth pin 302 of the second conducting wire 3 are connected to the rectifier circuit 20. In FIG. 15, the first secondary-side winding 300 and the second secondary-side winding 500 are connected in series, thereby increasing an input voltage of the rectifier circuit 20.

It should be noted that, in the foregoing technical solutions, the inductor winding 100 and the first primary-side winding 200 are formed by winding a same conducting wire on different magnetic posts. In some other examples, the inductor winding 100 and the first primary-side winding 200 may alternatively be formed by winding different conducting wires on a magnetic post, and the first primary-side winding 200 and the second primary-side winding 400 are formed by winding a same conducting wire on different magnetic posts, or the first secondary-side winding 300 and the second secondary-side winding 500 are formed by winding a same conducting wire on different magnetic posts, to reduce the quantity of pins, as described below by using examples.

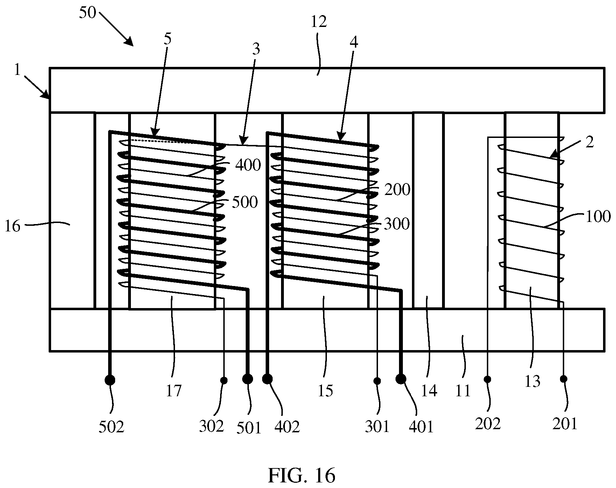

In some examples, as shown in FIG. 16, the first conducting wire 2 is wound around the inductor center post 13 and forms the inductor winding 100.

In some examples, as shown in FIG. 16, a part of the second conducting wire 3 is wound around the first transformer center post 15 and forms the first primary-side winding 200, and another part of the second conducting wire 3 is wound around the second transformer center post 17 and forms the second primary-side winding 400. In other words, the second conducting wire 3 is continuously wound around the first transformer center post 15 and the second transformer center post 17 in an uninterrupted manner. In this way, the first primary-side winding 200 and the second primary-side winding 400 include a total of two pins, namely, the third pin 301 and the fourth pin 302 at the two ends of the second conducting wire 3. In comparison with two discrete transformers in which a first primary-side winding and a second primary-side winding include a total of four pins, a quantity of pins of the integrated device provided in embodiments of this disclosure is reduced by at least two.

Implementations of the first secondary-side winding 300 and the second secondary-side winding 500 are not limited in embodiments of this disclosure. In some examples, as shown in FIG. 16, the third conducting wire 4 is wound around the first transformer center post 15 and forms the first secondary-side winding 300, and a fourth conducting wire 5 is wound around the second transformer center post 17 and forms the second secondary-side winding 500. In this way, the first transformer and the second transformer may be in parallel for use, or may be in series for use.

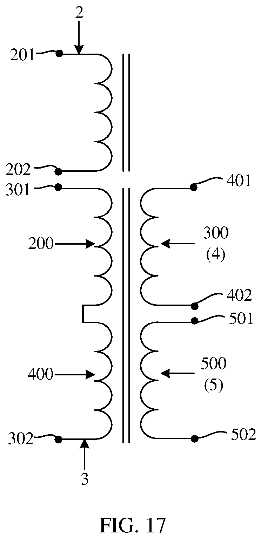

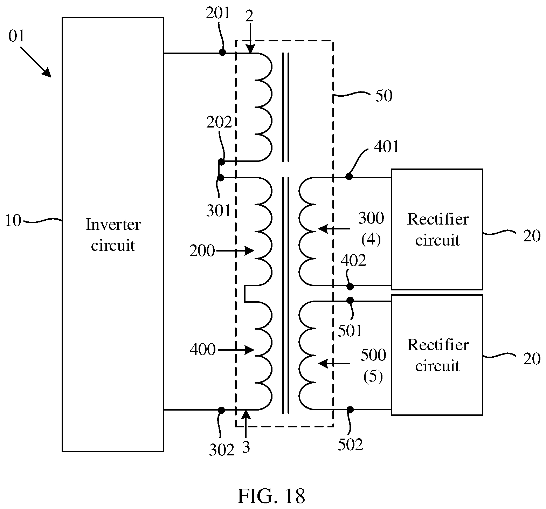

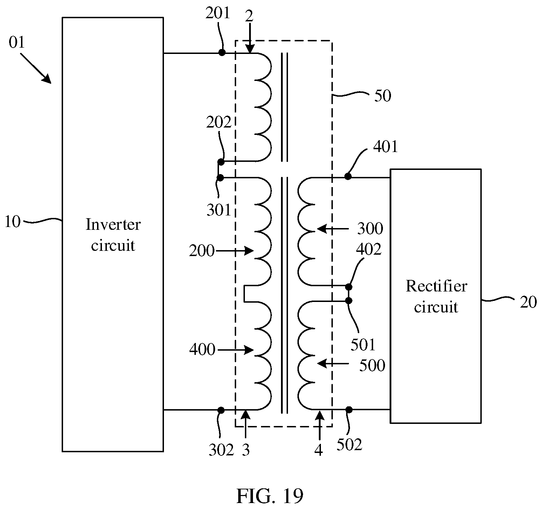

FIG. 17 is a principle diagram of the transformer-inductor integrated device 50 shown in FIG. 16. FIG. 18 and FIG. 19 are diagrams of two types of switching power supplies including the transformer-inductor integrated device 50 shown in FIG. 16. In some examples, as shown in FIG. 18, the switching power supply includes an inverter circuit 10, two rectifier circuits 20, and the transformer-inductor integrated device 50. The first pin 201 of the first conducting wire 2 is connected to the inverter circuit 10, the second pin 202 of the first conducting wire 2 is connected to the third pin 301 of the second conducting wire 3, and the fourth pin 302 of the second conducting wire 3 is connected to the inverter circuit 10. The fifth pin 401 and the sixth pin 402 of the third conducting wire 4 are connected to one rectifier circuit 20. A seventh pin 501 and an eighth pin 502 of the fourth conducting wire 5 are connected to the other rectifier circuit 20. The switching power supply shown in FIG. 18 may perform output externally through the two rectifier circuits 20.

In some other examples, as shown in FIG. 19, the switching power supply includes an inverter circuit 10, a rectifier circuit 20, and the transformer-inductor integrated device 50. The first pin 201 of the first conducting wire 2 is connected to the inverter circuit 10, the second pin 202 of the first conducting wire 2 is connected to the third pin 301 of the second conducting wire 3, and the fourth pin 302 of the second conducting wire 3 is connected to the inverter circuit 10. The fifth pin 401 of the third conducting wire 4 is connected to the rectifier circuit 20, the sixth pin 402 of the third conducting wire 4 is connected to the seventh pin 501 of the fourth conducting wire 5, and the eighth pin 502 of the fourth conducting wire 5 is connected to the rectifier circuit 20. The first secondary-side winding 300 and the second secondary-side winding 500 in FIG. 19 are connected in series, thereby increasing an input voltage of the rectifier circuit 20.

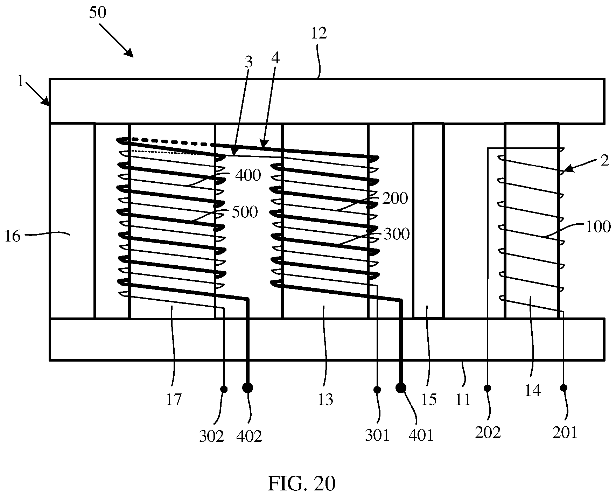

In addition to the technical solution in which the first secondary-side winding 300 and the second secondary-side winding 500 are separately wound by using different conducting wires, in some other examples, as shown in FIG. 20, the transformer-inductor integrated device 50 further includes a third conducting wire 4. A part of the third conducting wire 4 is wound around the first transformer center post 15 and forms the first secondary-side winding 300, and another part of the third conducting wire 4 is wound around the second transformer center post 17 and forms the second secondary-side winding 500. In other words, the third conducting wire 4 is continuously wound around the first transformer center post 15 and the second transformer center post 17 in an uninterrupted manner. In this way, the first secondary-side winding 300 and the second secondary-side winding 500 include a total of two pins, namely, the fifth pin 401 and the sixth pin 402 at the two ends of the third conducting wire 4. At least two pins are reduced in the technical solutions provided in embodiments of this disclosure compared with two discrete transformers in which a first secondary-side winding and a second secondary-side winding include a total of four pins.

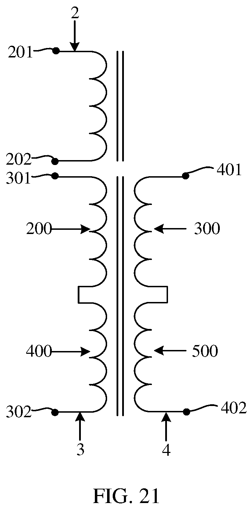

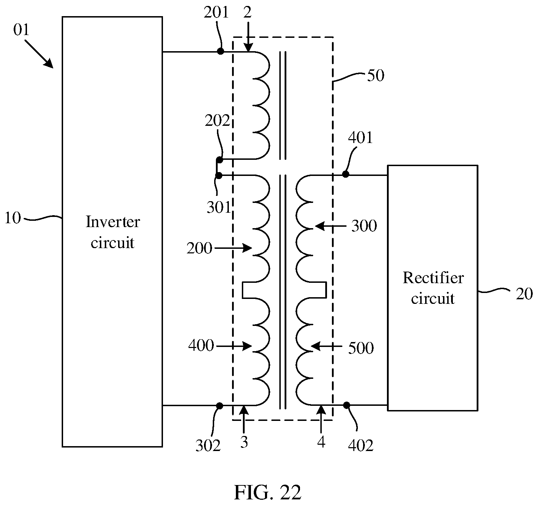

FIG. 21 is a principle diagram of the transformer-inductor integrated device 50 shown in FIG. 20. FIG. 22 is a diagram of a switching power supply including the transformer-inductor integrated device 50 shown in FIG. 21. In some examples, as shown in FIG. 22, the switching power supply includes an inverter circuit 10, a rectifier circuit 20, and the transformer-inductor integrated device 50. The first pin 201 of the first conducting wire 2 is connected to the inverter circuit 10, the second pin 202 of the first conducting wire 2 is connected to the third pin 301 of the second conducting wire 3, and the fourth pin 302 of the second conducting wire 3 is connected to the inverter circuit 10. The fifth pin 401 and the sixth pin 402 of the third conducting wire 4 are connected to the rectifier circuit 20. The first secondary-side winding 300 and the second secondary-side winding 500 in FIG. 22 are connected in series, thereby increasing an input voltage of the rectifier circuit 20.

It should be noted that, positions where the pins are led out are not limited in embodiments of this disclosure. For example, in FIG. 9, the first pin 201 is led out from the inductor center post 13, and the second pin 202 is led out from the second transformer center post 17. In some other examples, the first pin 201 may alternatively be led out from the first transformer center post 15 or the second transformer center post 17, and the second pin 202 may alternatively be led out from the inductor center post 13 or the first transformer center post 15.

In addition, winding layers of the inductor winding 100, the first primary-side winding 200, the first secondary-side winding 300, the second primary-side winding 400, and the second secondary-side winding 500 are not limited in embodiments of this disclosure. In the accompanying drawings provided in embodiments of this disclosure, description is made by using an example in which there is one layer of the foregoing windings. However, during application, there may be two or more layers.

It should be further noted that principles of the switching power supply provided in embodiments of this disclosure may be the same as principles of a switching power supply in a related technology. A difference lies only in that the inductor and the transformer are integrated in the switching power supply provided in embodiments of this disclosure, but an inductor and a transformer are discrete in the switching power supply in the related technology. In addition, the switching power supply provided in embodiments of this disclosure may employ an LLC resonant converter (inductor-inductor-capacitor resonant converter, LLC) or a DAB converter (dual active bridge converter, DAB) architecture. In some examples, the switching power supply provided in embodiments of this disclosure is the foregoing communication power supply.

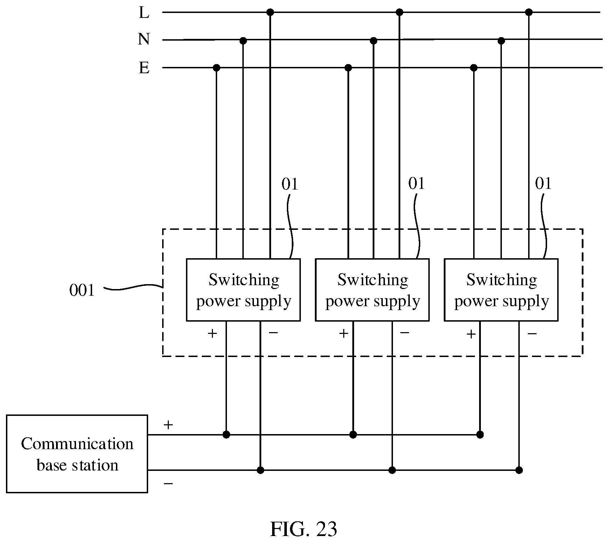

An embodiment of this disclosure further provides a power supply device 001. As shown in FIG. 23, the power supply device 001 includes a plurality of switching power supplies 01 described previously, and the plurality of switching power supplies 01 are connected in parallel. The plurality of switching power supplies 01 connected in parallel can increase a power supply current and improve a power supply capability.

In some examples, as shown in FIG. 23, the switching power supply 01 is a communication power supply, input ends of the plurality of switching power supplies 01 are connected to a mains power supply, their output ends are connected to a communication base station, and the plurality of switching power supplies 01 are connected in parallel.

The foregoing descriptions are merely optional embodiments of this disclosure, but are not intended to limit this disclosure. Any modification, equivalent replacement, improvement, or the like made within the principle of this disclosure shall fall within the protection scope of this disclosure.

## Claims

1. A transformer-inductor integrated device, wherein the transformer-inductor integrated device (50) comprises a magnetic core (1), a first conducting wire (2), and a second conducting wire (3);
the magnetic core (1) comprises a bottom plate (11), a top plate (12), an inductor center post (13), a first side post (14), and a first transformer center post (15), wherein one end of the inductor center post (13), the first side post (14), and the first transformer center post (15) is connected to the bottom plate (11), the other end is connected to the top plate (12), and the first side post (14) is arranged between the inductor center post (13) and the first transformer center post (15);
a part of the first conducting wire (2) is wound around the inductor center post (13) and forms an inductor winding (100), and a part of the first conducting wire (2) is wound around the first transformer center post (15) and forms a first primary-side winding (200) of a first transformer, wherein two ends of the first conducting wire (2) form a first pin (201) and a second pin (202) respectively; and
the second conducting wire (3) is wound around the first transformer center post (15) and forms a first secondary-side winding (300) of the first transformer, wherein two ends of the second conducting wire (3) form a third pin (301) and a fourth pin (302) respectively.

2. The transformer-inductor integrated device according to claim 1, wherein the magnetic core (1) further comprises a second side post (16), one end of the second side post (16) is connected to the bottom plate (11), the other end is connected to the top plate (12), and the first transformer center post (15) is arranged between the first side post (14) and the second side post (16).

3. The transformer-inductor integrated device according to claim 1 or 2, wherein the magnetic core (1) further comprises a second transformer center post (17), one end of the second transformer center post (17) is connected to the bottom plate (11), the other end is connected to the top plate (12), and the first transformer center post (15) is arranged between the second transformer center post (17) and the first side post (14); and
a part of the first conducting wire (2) is further wound around the second transformer center post (17) and forms a second primary-side winding (400) of a second transformer, and the second transformer center post (17) is further wound with a second secondary-side winding (500) of the second transformer.

4. The transformer-inductor integrated device according to claim 3, wherein the transformer-inductor integrated device (50) further comprises a third conducting wire (4), the third conducting wire (4) is wound around the second transformer center post (17) and forms the second secondary-side winding (500), and two ends of the third conducting wire (4) form a fifth pin (401) and a sixth pin (402) respectively.

5. The transformer-inductor integrated device according to claim 3, wherein a part of the second conducting wire (3) is wound around the first transformer center post (15) and forms the first secondary-side winding (300), and a part of the second conducting wire (3) is wound around the second transformer center post (17) and forms the second secondary-side winding (500).

6. The transformer-inductor integrated device according to any one of claims 1 to 5, wherein a direction of a magnetic field generated by the inductor winding (100) at the first side post (14) is opposite to a direction of a magnetic field generated by the first primary-side winding (200) at the first side post (14).

7. A transformer-inductor integrated device, wherein the transformer-inductor integrated device (50) comprises a magnetic core (1), a first conducting wire (2), and a second conducting wire (3);
the magnetic core (1) comprises a bottom plate (11), a top plate (12), an inductor center post (13), a first side post (14), a first transformer center post (15), and a second transformer center post (17), wherein one end of the inductor center post (13), the first side post (14), the first transformer center post (15), and the second transformer center post (17) is connected to the bottom plate (11), the other end is connected to the top plate (12), and the inductor center post (13), the first side post (14), the first transformer center post (15), and the second transformer center post (17) are arranged in sequence;
the first conducting wire (2) is wound around the inductor center post (13) and forms an inductor winding (100), wherein two ends of the first conducting wire (2) form a first pin (201) and a second pin (202) respectively;
a part of the second conducting wire (3) is wound around the first transformer center post (15) and forms a first primary-side winding (200) of a first transformer, and a part of the second conducting wire (3) is wound around the second transformer center post (17) and forms a second primary-side winding (400) of a second transformer, wherein two ends of the second conducting wire (3) form a third pin (301) and a fourth pin (302) respectively; and
the first transformer center post (15) is further wound with a first secondary-side winding (300) of the first transformer, and the second transformer center post (17) is further wound with a second secondary-side winding (500) of the second transformer.

8. The transformer-inductor integrated device according to claim 7, wherein the transformer-inductor integrated device (50) further comprises a third conducting wire (4) and a fourth conducting wire (5);
the third conducting wire (4) is wound around the first transformer center post (15) and forms the first secondary-side winding (300), wherein two ends of the third conducting wire (4) form a fifth pin (401) and a sixth pin (402) respectively; and
the fourth conducting wire (5) is wound around the second transformer center post (17) and forms the second secondary-side winding (500), wherein two ends of the fourth conducting wire (5) form a seventh pin (501) and an eighth pin (502) respectively.

9. The transformer-inductor integrated device according to claim 7, wherein the transformer-inductor integrated device (50) further comprises a third conducting wire (4); and
a part of the third conducting wire (4) is wound around the first transformer center post (15) and forms the first secondary-side winding (300), and a part of the third conducting wire (4) is wound around the second transformer center post (17) and forms the second secondary-side winding (500), wherein two ends of the third conducting wire (4) form a fifth pin (401) and a sixth pin (402) respectively.

10. The transformer-inductor integrated device according to any one of claims 7 to 9, wherein the magnetic core (1) further comprises a second side post (16), one end of the second side post (16) is connected to the bottom plate (11), the other end is connected to the top plate (12), and the first transformer center post (15) and the second transformer center post (17) are arranged between the first side post (14) and the second side post (16).

11. The transformer-inductor integrated device according to any one of claims 7 to 10, wherein a direction of a magnetic field generated by the inductor winding (100) at the first side post (14) is opposite to a direction of a magnetic field generated by the first primary-side winding (200) at the first side post (14).

12. A switching power supply, wherein the switching power supply comprises an inverter circuit (10), a rectifier circuit (20), and the transformer-inductor integrated device (50) according to any one of claims 1 to 11; and
the transformer-inductor integrated device (50) is connected between the inverter circuit (10) and the rectifier circuit (20).

13. A power supply device, wherein the power supply device (001) comprises a plurality of switching power supplies (01) according to claim 12, and the plurality of switching power supplies (01) are connected in parallel.
